# EUROPÄISCHE PATENTSCHRIFT

(11) **EP 2 095 922 B1**
(45) Veröffentlichungstag und Bekanntmachung des Hinweises auf die Patenterteilung: **19.03.2014**
(21) Anmeldenummer: 09001931.6
(22) Anmeldetag: 12.02.2009
(51) Int. Cl.: B27D 5/00, B27M 1/08, B25J 9/00, B29C 63/00

(54) **Anlage zum Bearbeiten von plattenförmigen Werkstücken**
Assembly for processing board-shape workpieces
Installation de traitement de pièces usinées en forme de plaques

(30) Priorität: 27.02.2008 DE 102008011312
(43) Veröffentlichungstag der Anmeldung: 02.09.2009
(73) Patentinhaber: IMA Klessmann GmbH Holzbearbeitungssysteme, 32312 Lübbecke (DE)
(72) Erfinder: Hampel, Thomas, 32312 Lübbecke (DE); Redeker, Günter, 32351 Stemwede (DE)
(74) Vertreter: Schober, Mirko

(56) Entgegenhaltungen:
- EP-A1- 0 512 126
- EP-A1- 1 607 199
- EP-A2- 0 748 683
- WO-A1-03/080288
- BE-A2- 892 222
- US-A- 5 265 317
- US-A1- 2002 072 825
- US-A1- 2006 048 364
- CULBRETH C T ET AL: "A FLEXIBLE MANUFACTURING SYSTEM FOR FURNITURE PRODUCTION", MANUFACTURING REVIEW, AMERICAN SOCIETY OF MECHANICAL ENGINEERS, NEW YORK, US, Bd. 2, Nr. 4, 1. Dezember 1989 (1989-12-01), Seiten 257-265, XP000084756, ISSN: 0896-1611

## Beschreibung

Die Erfindung bezieht sich auf eine Anlage gemäß den Merkmalen des Oberbegriffs des Patentanspruchs 1.

Bei einer solchen Anlage ist es bekannt, zum Aufsetzen der zu bearbeitenden Werkstücke auf den Bearbeitungsplatz der Werkzeugmaschine einen Handlingsroboter einzusetzen. Ein solcher Handlingsroboter entnimmt den zu bearbeitenden Plattenrohling von einem sogenannten Rohlingsplatz, und er legt das fertig bearbeitete Werkstück, welches er vom Bearbeitungsplatz der Werkzeugmaschine abholt, auf einem Werkstückablageplatz ab.

In dem Artikel "A flexible manufactoring System for furniture produktion" ist eine gattungsgemäße Anlage beschrieben. Der dort verwendete Roboter dient dazu, das Werkstück über Saugspanner aus einer Bearbeitungsmaschine zu entnehmen und an entsprechend anderer Stelle abzulegen. Der Roboter ist nicht in den Fertigungsprozess mit eingebunden und übernimmt insbesondere keine Vorschubkomponente.

In WO 03/080288 A1 wird das Werkstück an einer Bearbeitungsstation durch einen Roboter abgelegt, dort bearbeitet und anschließend vom Roboter zur nächten Bearbeitungsstation befördert.

In US 5,265,317 dient ein Roboter lediglich dazu, ein Werkstück in eine Halterung einzusetzen und daraus wieder zu entfernen.

Der Erfindung liegt die Aufgabe zugrunde, eine Anlage zum Bearbeiten von plattenförmigen Werkstücken aus Holz und/oder Holzaustauschstoffen zu schaffen, bei der eine Weiter- oder Nachbearbeitung der auf der Werkzeugmaschine bearbeiteten Werkstücke an anderer Stelle im automatischen Ablauf in besonders rationeller Weise vorgenommen werden kann.

Diese Aufgabe wird bei einer Anlage der oben genannten Art mittels der kennzeichnenden Merkmale des Patentanspruchs 1 gelöst.

Für die erfindungsgemäße Lösung ist wesentlich, den Roboter über die mit ihm möglichen Handlingsfunktionen hinaus, mit denen er die Bearbeitungsplätze mit Werkstücken bedient und die Werkstücke von dort abtransportiert, aktiv bei der Werkstückbearbeitung einzusetzen. Hierzu wirkt der Roboter an der räumlich von der Werkzeugmaschine getrennten Bearbeitungsstation mit dem dortigen Bearbeitungsaggregat zusammen und übernimmt zumindest eine der Vorschubkomponenten für die Bewegung des Werkstücks beim Bearbeitungsvorgang.

Vorteilhafte Ausgestaltungsmerkmale der Erfindung ergeben sich aus den Unteransprüchen.

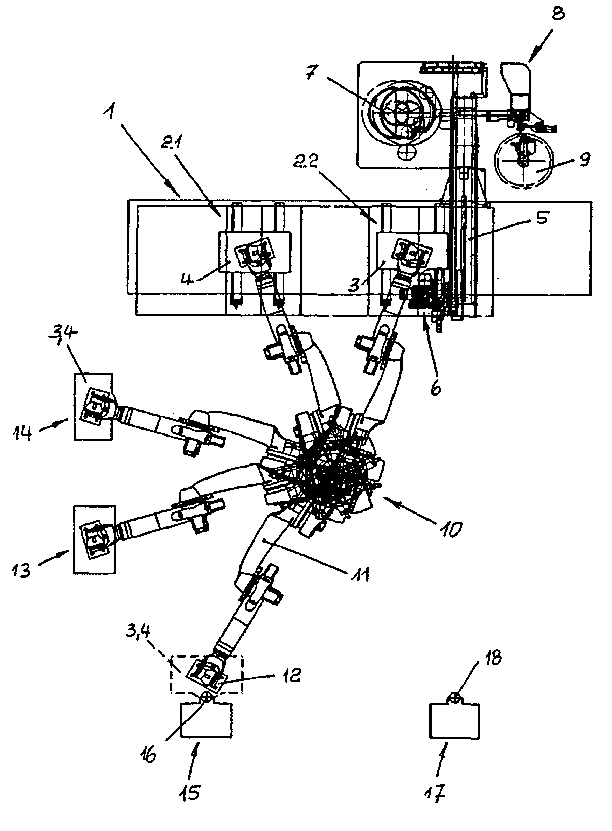

Die Erfindung wird nachfolgend anhand der Zeichnung an einem Ausführungsbeispiel noch näher erläutert. Die Zeichnung zeigt eine schematische Draufsicht auf eine Anlage zum Bearbeiten von plattenförmigen Werkstücken.

Im einzelnen erkennt man in der Zeichnung eine Werkzeugmaschine 1, bei der es sich um ein programmgesteuertes Bearbeitungszentrum handelt. Die Maschine 1 weist zwei in Abstand nebeneinander angeordnete Bearbeitungsplätze 2.1 und 2.2 auf, über die hinweg ein Ausleger 5 oder ein Portal verfahrbar ist. Auf den Bearbeitungsplätzen 2.1, 2.2 werden plattenförmige Werkstücke 3, 4 aufgenommen, indem sie auf Saugspannern so fixiert werden, daß sie im Umlauf entlang ihrer Schmalseiten bearbeitet werden können. Hierbei geht es in erster Linie um eine Kantenbearbeitung an den Werkstücken 3, 4, wozu ein Kantenbearbeitungsaggregat 6 vorgesehen ist. Durch Verfahren des Auslegers 5 und Verfahren des Kantenbearbeitungsaggregates 6 entlang dem Ausleger 5 kann das Kantenbearbeitungsaggregat 6 um das jeweilige Werkstück 3, 4 herumgeführt werden. Bei dem Kantenbearbeitungsaggregat 6 handelt es sich um ein Fräsaggregat, mit welchem an einen die Werkstücke 3, 4 ergebenden Plattenrohling die gewünschte Umrißkontur spannehmend angearbeitet wird. Dadurch erhält das jeweilige Werkstück 3, 4 sein Umrißformat, insoweit ist davon auszugehen, daß auf den Bearbeitungsplätzen 2.1 und 2.2 der Maschine 1 die Werkstücke 3, 4 formatiert werden. Das jeweils passende Fräswerkzeug wird an einem Werkzeugmagazin 7 in das Kantenbearbeitungsaggregat 6 eingewechselt.

Auf den Bearbeitungsplätzen 2.1, 2.2 der Werkzeugmaschine 1 kann auf die Schmalseiten der formatierten Werkstücke 3, 4 ein Kantenband aufgeklebt werden. Dazu ist ein weiteres Aggregat 8 am Ausleger 5 der Werkzeugmaschine 1 vorgesehen, bei dem es sich um ein sogenanntes Verleimteil handelt, welches entgegen seinem Namen das Kantenband auf die betreffende Werkstückschmalseite aufklebt. In gleicher Weise wie das Kantenbearbeitungsaggregat 6 kann das Aggregat 8 entlang den Schmalseiten um das jeweilige Werkstück 3, 4 herumgefahren werden.

Die Werkstücke 3, 4 bedürfen einer Weiter- oder Nachbearbeitung, dazu werden sie von den Bearbeitungsplätzen 2.1, 2.2 der Werkzeugmaschine 1 abgenommen. Hierfür ist ein Roboter 10 vorgesehen, der einen Roboterarm 11 aufweist, welcher mit den notwendigen Freiheitsgraden, in der Praxis mit sechs Freiheitsgraden, versehen ist. In der Zeichnung ist der einzige Roboterarm 11 in den verschiedenen Positionen dargestellt, die er bei der Bedienung bei der von ihm anzufahrenden Stellen einnimmt. Am Ende des Roboterarms 11 ist eine Werkstückaufnahmevorrichtung 12 angeordnet, die aus einer Saugtraverse besteht. So können die an der Saugtraverse 12 fixierten Werkstücke 3, 4 beliebig geschwenkt werden, insbesondere kann jede der Plattenbreitseiten nach oben oder nach unten hin angeordnet werden. Auch eine senkrechte Plattenlage ist möglich, je nachdem welche Weiterbearbeitungen an den Werkstücken 3, 4 vorgenommen werden. Des weiteren kann die Saugtraverse 12 die plattenförmigen Werkstücke 3, 4 in ihrer Plattenebene schwenken.

Beim dargestellten Ausführungsbeispiel geht es insbesondere um ein Bündigfräsen der auf die Schmalseiten der Werkstücke 3, 4 aufgeklebten Kantenbänder, die zunächst noch über die Plattenbreitseiten vorstehen.

Der Roboter 10, der innerhalb seiner Reichweite mit Abstand neben der Werkzeugmaschine 1 angeordnet ist, befördert die aufgenommene, formatierte Platte 3, 4 zu einer Bearbeitungsstation 15, an der das Bündigfräsen der über die Breitseiten der Werkstücke 3, 4 überstehenden Ränder des Kantenbandes vorgenommen wird. Hierbei bleibt die Platte 3, 4 an der Werkstückaufnahme 12 am Roboterarm 11 fixiert. Die Bearbeitungsstation 15 ist ortsfest angeordnet und mit einem feststehenden Bearbeitungsaggregat 16, dem Bündigfräsaggregat, versehen. Bei dem Roboter 10 handelt es sich um eine programmgesteuerte Maschine, die mit dem Roboterarm 11 die bündig zu fräsenden Kanten entlang dem Fräswerkzeug des Aggregates 16 führt. Das Werkstück 3, 4 wird entsprechend mittels der Aufnahmevorrichtung 12 am Roboterarm 11 geschwenkt und der Roboterarm 11 führt eine dazu überlagerte Bewegung aus, um die Umrißkontur des Werkstücks 3, 4 entlang dem Bündigfräswerkzeug zu bewegen. Zudem können für das Bündigfräsen noch die üblichen Tastvorrichtungen vorgesehen sein, um die Höhentoleranzen entlang dem Umriß der Werkstücke 3, 4 auszugleichen.

Je nach der gewünschten Kapazität können eine zweite oder mehrere Bearbeitungsstationen 17 mit weiteren Bearbeitungsaggregaten 18 vorgesehen sein. Grundsätzlich können an den Bearbeitungsstationen 15, 17 auch andere Bearbeitungen vorgenommen werden, so können die Werkstücke 3, 4 gebohrt werden, darin können Dübel eingesetzt oder daran auch Beschlagteile montiert werden. Auch das Anfahren der Kantenbänder kann an solchen Bearbeitungsstationen 15, 17 vorgenommen werden, so daß sich die Bearbeitung auf der Werkzeugmaschine 1 auf das Formatieren der Platten 3, 4 beschränkt. Auch ein Schwabbeln oder Abziehen der auf die Werkstückschmalseiten aufgetragenen Kantenbänder mittels entsprechender Werkzeuge kann von den Bearbeitungsstationen 15, 17 übernommen werden.

Es versteht sich, daß von dem Roboterarm 11 des Roboters 10 die Bearbeitungsplätze 2.1, 2.2 auf der Werkzeugmaschine 1 und die Bearbeitungsaggregate 16, 18 der zusätzlichen Bearbeitungsstationen 15, 17 angefahren werden können, folglich müssen die anzufahrenden Stellen sämtlich innerhalb der Reichweite der Werkstückaufnahmevorrichtung 12 am Roboterarm 11 liegen. Das gleiche gilt für einen Rohlingsplatz 13, von dem der Roboter die zu bearbeitenden Rohlingsplatten abholt und als erstes zu den Bearbeitungsplätzen 2.1 oder 2.2 der Werkzeugmaschine 1 befördert. Ferner ist ein Werkstückablageplatz 14 vorgesehen, auf dem die fertig bearbeiteten Werkstücke 3, 4 vom Roboter 10 abgelegt werden.

## Patentansprüche

1. Anlage zum Bearbeiten von plattenförmigen Werkstücken aus Holz und/oder Holzaustauschstoffen mit einer Werkzeugmaschine (1) mit zumindest einem Bearbeitungsplatz (2.1; 2.2) zur Aufnahme eines Werkstückes (3, 4) und mit zumindest einer von der Werkzeugmaschine (1) räumlich getrennten Bearbeitungsstation (15, 17), wobei die Anlage einen Roboter (10) aufweist, der mit einer Werkstückaufnahmevorrichtung (12) am Roboterarm (11) im Umfeld der Werkzeugmaschine (1) angeordnet ist, wobei der Bearbeitungsplatz (2.1, 2.2) der Werkzeugmaschine (1) und die Bearbeitungsstation (15, 17) innerhalb der Reichweite des Roboterarms (11) angeordnet sind,
**dadurch gekennzeichnet,**
**dass** die Werkzeugmaschine (1) ein Kantenbearbeitungsaggregat (6) zum Formatieren der Werkstücke (3, 4) und ein Aggregat (8) zum Aufkleben eines Kantenbandes auf die Werkstücke (3, 4) aufweist, dass eine Bearbeitungsstation (15) mit einem Bündigfräsaggregat (16) versehen ist und
**dass** der Roboter (10) so ausgelegt ist, dass bei Werkstückbearbeitung an der Bearbeitungsstation (15, 17) deren Bearbeitungsaggregat (16, 18) und der Roboterarm (11) mit dem an seiner Werkstückaufnahme (12) gehaltenen Werkstück (3, 4) relativ zueinander bewegt werden, wobei der Roboter (10) so ausgelegt ist, dass er beim Bearbeitungsvorgang zumindest eine Vorschubkomponente für die Bewegung des Werkstücks übernimmt.

2. Anlage nach Anspruch 1,
**dadurch gekennzeichnet,**
**dass** die zumindest eine weitere Bearbeitungsstation (15, 17) ortsfest angeordnet ist.

3. Anlage nach Anspruch 2,
**dadurch gekennzeichnet,**
**dass** das Bearbeitungsaggregat (16, 18) an der Bearbeitungsstation (15, 17) feststehend angeordnet ist.

4. Anlage nach einem der Ansprüche 1 - 3,
**dadurch gekennzeichnet,**
**dass** die Werkstückaufnahmevorrichtung (12) am Roboterarm (11) um zumindest zwei senkrecht aufeinanderstehenden Achsen schwenkbar ist.

5. Anlage nach Anspruch 4,
**dadurch gekennzeichnet,**
**dass** die Werkstückaufnahmevorrichtung (12) eine die plattenförmigen Werkstücke (3, 4) an einer ihrer Breitseiten erfassende Saugtraverse ist.

6. Anlage nach einem der Ansprüche 1 - 5,
**dadurch gekennzeichnet,**
**dass** innerhalb der Reichweite des Roboterarms (11) ein Rohlingsplatz (13) angeordnet ist.

7. Anlage nach einem der Ansprüche 1 - 6,
**dadurch gekennzeichnet,**
**dass** innerhalb der Reichweite des Roboterarms (11) ein Werkstückablageplatz (14) angeordnet ist.

8. Anlage nach einem der Ansprüche 1 - 7,
**dadurch gekennzeichnet,**
**dass** das Kantenbearbeitungsaggregat (6) der Werkzeugmaschine (1) ein Formatfräsaggregat ist.

9. Anlage nach Anspruch 8,
**dadurch gekennzeichnet,**
**dass** das Aggregat (16, 18) an der Bearbeitungsstation (15, 17) ein Fräs- oder Ziehaggregat zum Nachbearbeiten des auf die formatierten Kanten der Werkstücke (3, 4) aufgetragenen Kantenbandes ist.

## Claims

1. Assembly for machining board-shaped workpieces from wood and / or wood replacement materials, having a machine tool (1) with at least one machining area (2.1; 2.2) for receiving a workpiece (3, 4) and having at least one machining station (15, 17) spatially separated from the machine tool (1), wherein the assembly has a robot (10) which is arranged with a workpiece receiving device (12) on the robotic arm (11) in the environment of the machine tool (1), wherein the machining area (2.1, 2.2) of the machine tool (1) and the machining station (15, 17) are arranged within the reach of the robotic arm (11),
**characterised in that**
the machine tool (1) has an edge machining unit (6) for formatting the workpieces (3, 4) and a unit (8) for sticking an edge strip on the workpieces (3, 4), a machining station (15) is provided with a flush milling unit (16) and
the robot (10) is designed so that, during machining of the workpiece on the machining station (15, 17), the machining unit (16, 18) thereof and the robotic arm (11) with the workpiece (3, 4) held on its workpiece receiving element (12) are moved relative to each other, wherein the robot (10) is designed so that it takes over at least one feed component for moving the workpiece during the machining process.

2. Assembly according to claim 1,
**characterised in that**
the at least one further machining station (15, 17) is arranged in a fixed location.

3. Assembly according to claim 2,
**characterised in that**
the machining unit (16, 18) is arranged in a stationary manner on the machining station (15, 17).

4. Assembly according to one of the claims 1 - 3,
**characterised in that**
the tool receiving device (12) can be pivoted on the robotic arm (11) around at least two shafts perpendicular relative to each other.

5. Assembly according to claim 4,
**characterised in that**
the workpiece receiving device (12) is a suction beam detecting the board-shaped workpieces (3, 4) at one of their short ends.

6. Assembly according to one of the claims 1 - 5,
**characterised in that**
a blank area (13) is arranged within the reach of the robotic arm (11).

7. Assembly according to one of the claims 1 - 6,
**characterised in that**
a workpiece deposit area (14) is arranged within the reach of the robotic arm (11).

8. Assembly according to one of the claims 1 - 7,
**characterised in that**
the edge machining unit (6) of the machine tool (1) is a format milling unit.

9. Assembly according to claim 8,
**characterised in that**
the unit (16, 18) on the machining station (15, 17) is a milling or drawing unit for subsequent machining of the edge strip applied to the formatted edges of the workpieces (3, 4).

## Revendications

1. Installation de traitement de pièces en forme de plaques en bois et / ou en matériaux de remplacement du bois, avec une machine-outil (1) avec au moins un poste de traitement (2,1 ; 2.2) pour la réception d'une pièce à usiner (3, 4) et avec au moins une station de traitement (15, 17) spatialement séparée de la machine-outil (1), sachant que ladite installation est dotée d'un robot (10), qui, pourvu d'un dispositif de réception de pièce à usiner (12) installé sur un bras de robot (11), est disposé dans l'entourage de la machine-outil (1), sachant que le poste de traitement (2.1, 2.2) de ladite machine-outil (1) et la station de traitement (15, 17) sont disposés dans le rayon d'action du bras de robot (11), **caractérisée en ce que**,
la machine-outil (1) est dotée d'une unité de traitement de chants (6) pour la mise en forme des pièce à usiner (3, 4) et d'une unité de collage (8) pour le collage d'une bande de chant sur les pièces à usiner (3, 4),
qu'une station de traitement (15) est équipée d'une unité de fraisage (16) et
que le robot (10) est configuré de telle manière que, lors de l'usinage des pièces dans la station de traitement (15, 17) l'unité d'usinage (16, 18) de celle-ci et le bras de robot (11), qui maintient la pièce à usiner (3, 4) avec son dispositif de réception (12), se déplacent par l'une par rapport à l'autre, sachant que le robot (10) est réalisé de sorte que, lord d'une opération de traitement, il reprenne au moins une composante d'avance pour le mouvement de la pièce.

2. Installation selon la revendication 1,
**caractérisée en ce que**
l'autre station de traitement (15, 17) au moins prévue est installée à un lieu fixe.

3. Installation selon la revendication 2,
**caractérisée en ce que**
l'unité de traitement (16, 18) est installé fixement dans la station de traitement (15, 17).

4. Installation selon l'une des revendications 1 à 3,
**caractérisée en ce que**
le dispositif de réception de pièce à usiner (12) peut être pivoté sur le bras de robot (11) autour d'au moins deux axes qui sont disposés verticalement l'un sur l'autre.

5. Installation selon la revendication 4,
**caractérisée en ce que**
le dispositif de réception de pièce à usiner (12) est une traverse aspirante qui saisit les pièces en forme de plaques (3, 4) par l'une de leurs larges faces.

6. Installation selon l'une des revendications 1 à 5,
**caractérisée en ce que**,
dans le rayon d'action du bras de robot (11), est aménagé un emplacement (13) pour les ébauches de plaques.

7. Installation selon l'une des revendications 1 à 6,
**caractérisée en ce que**,
dans le rayon d'action du bras de robot (11), est aménagé un emplacement (14) pour les pièces à usiner.

8. Installation selon l'une des revendications 1 à 7,
**caractérisée en ce que**
l'unité de traitement de chants (6) de la machine-outil (1) est une unité de mise en forme par fraisage.

9. Installation selon la revendication 8,
**caractérisée en ce que**
l'unité de traitement (16, 18) de la station de traitement (15, 17) est une unité de fraisage ou d'étirage pour la retouche de la bande de chant appliquée sur les bords mis en forme des pièces à usiner (3, 4).
